# DEMANDE DE BREVET EUROPEEN

(11) **EP 4 497 320 A1**
(43) Date de publication de la demande: **29.01.2025**
(21) Numéro de dépôt: 24187956.8
(22) Date de dépôt: 11.07.2024
(51) Int. Cl.: A01D 87/12, A01D 90/08

(54) **MACHINE AGRICOLE DE DISTRIBUTION DE PRODUIT POUR L'ALIMENTATION DES ANIMAUX ET/OU LA FORMATION DE LEUR LITIERE**

(30) Priorité: 28.07.2023 FR 2308165
(71) Demandeur: Kuhn-Audureau SAS, 85260 La Copechagnière (FR)
(72) Inventeur: GAUTRON, Pascal, 85250 SAINT-FULGENT (FR); DESURIER, Théo, 85000 LA ROCHE-SUR-YON (FR)
(74) Mandataire: Hager, Esther Evelyne

(57) **Abrégé**

La présente invention a pour objet une machine agricole de distribution de produit (B) pour l'alimentation des animaux et/ou la formation de leur litière, ladite machine agricole de distribution comprenant un caisson (1) et une porte (2) de chargement articulée en rotation sur le caisson (1) autour d'un premier axe de rotation (X1), un organe complémentaire (3) articulé en rotation sur la porte (2) autour d'un deuxième axe de rotation (X2) et au moins un vérin (4) principal pour l'actionnement de la porte (2).

Elle se caractérise en ce que le ou chaque vérin principal est articulé en rotation sur le caisson autour d'un troisième axe de rotation (X3) et sur l'organe complémentaire (3) autour d'un quatrième axe de rotation (X4) et en ce qu'elle comprend en outre un dispositif de gestion de la rotation de l'organe complémentaire par rapport à la porte (2) comprenant le ou chaque vérin (4) principal et au moins un commutateur de mise en rotation (5) configuré pour générer la mise en rotation de l'organe complémentaire (3) par rapport à la porte (2) en fonction du couple appliqué sur l'organe complémentaire (3) par le ou chaque vérin (4) principal.

## Description

La présente invention concerne le domaine des machines agricoles et plus particulièrement des machines agricoles de distribution de produit pour l'alimentation des animaux et/ou la formation de leur litière. La présente invention a pour objet une telle machine.

Ces machines agricoles de distribution sont munies de moyens de chargement se présentant sous la forme d'une porte permettant le chargement de produit pour l'alimentation des animaux et/ou la formation de leur litière. Ces produits, généralement de la paille ou du foin se présentant sous la forme de balles réalisées par une presse à balle, sont chargés dans un caisson de la machine en vue de leur distribution. Elles comprennent en outre des roues pour permettre leur déplacement sur le sol.

La porte est montée de manière basculante autour d'un axe situé en partie basse du caisson de la machine. La porte est actionnée au moyen d'au moins un vérin hydraulique articulé en rotation sur le caisson et sur la porte. La porte se situe à l'arrière du caisson et bascule entre une position de fermeture et une position d'ouverture. La porte permet notamment d'obturer une ouverture de chargement pratiquée dans le caisson, généralement à l'arrière du caisson. La position d'ouverture de la porte permet le chargement des produits dans le caisson de la machine de distribution.

Cependant, la porte ne permet pas de prélever directement une balle posée sur le sol pour l'introduire dans le caisson. Le document FR2773947 apporte une solution à ce problème avec un dispositif permettant à l'opérateur de charger directement une balle. Le dispositif comprend un organe complémentaire susceptible d'être glissé sous la balle après avoir positionné correctement la partie arrière du caisson dans laquelle est située la porte par rapport à la balle à charger. L'organe complémentaire s'étend à partir de la porte dans le prolongement de cette dernière lorsqu'elle repose sur le sol. L'organe complémentaire, sous la forme d'un arceau, est articulé autour d'un axe de rotation parallèle à l'axe de rotation de la porte sur le caisson. Lorsque la porte chargée de la balle est relevée vers sa position de fermeture pour introduire la balle dans le caisson, l'organe complémentaire est actionné pour être mis dans une position inclinée par rapport à la porte, grâce à des moyens appropriés, pour soutenir et bloquer la balle et éviter qu'elle s'échappe par gravité. Les branches de l'arceau sont articulées sur des axes disposés latéralement à l'extrémité de la porte et, pour l'une d'elles au moins, sont reliées au moyen d'une bielle latérale à la partie arrière fixe du caisson de façon à provoquer, lors de l'opération de manoeuvre de la porte, un mouvement conjugué de l'arceau facilitant la prise en charge de la balle par la porte, en vue de son introduction dans le caisson. Les extrémités de chacune des branches latérales sont reliées par des bielles latérales à des axes situés sur les côtés du caisson, au-dessus des axes d'articulation (de rotation) de la porte arrière.

Toutefois, dans un tel dispositif, du fait du mouvement de l'organe complémentaire qui est associé/conjugué au mouvement de la porte et notamment du vérin de la porte, le mouvement de l'organe complémentaire est entièrement dépendant du mouvement de la porte. Le dispositif réalise ainsi, pour chaque angle d'ouverture/fermeture de la porte (ou chaque position de rotation de la porte), une seule position (ou orientation) de l'organe complémentaire par rapport à la porte. Dans certaines conditions, lorsque la machine opère dans une cour de ferme en pente par exemple, le chargement de la balle sera plus difficile, car la balle devra surmonter l'obstacle formé par la porte ou par l'organe complémentaire, puisque l'un au moins de ces deux éléments (porte et organe complémentaire) ne sera pas dans une position adéquate. Par ailleurs, du fait d'un tel mouvement conjugué, lorsque la porte est fermée, l'organe complémentaire reste dans la même position que celle permettant le blocage de la balle (formant une position repliée par rapport au plan de la porte) et s'étend au moins dans le, voire au-dessus du, caisson, ce qui a pour effet de créer un obstacle au chargement par le haut. Par ailleurs, la position de l'organe complémentaire est figée au-dessus du caisson lorsque la porte est fermée. Cette position de l'organe complémentaire augmente donc l'encombrement en hauteur et empêche l'utilisation de la machine de distribution pour certains hangars, dont l'entrée d'accès est trop basse.

La présente invention a pour but de pallier ces inconvénients en proposant une machine agricole de distribution de produit pour l'alimentation des animaux et/ou la formation de leur litière permettant une plus grande polyvalence et une meilleure adaptation à l'environnement et aux conditions de chargement et d'utilisation.

La machine agricole de distribution de produit pour l'alimentation des animaux et/ou la formation de leur litière selon la présente invention, la machine agricole de distribution comprenant un caisson et une porte de chargement articulée en rotation sur le caisson autour d'un premier axe de rotation, un organe complémentaire articulé en rotation sur la porte autour d'un deuxième axe de rotation et au moins un vérin principal pour l'actionnement de la porte, se caractérise en ce que le ou chaque vérin principal est articulé en rotation sur le caisson autour d'un troisième axe de rotation et sur l'organe complémentaire autour d'un quatrième axe de rotation et en ce qu'elle comprend en outre un dispositif de gestion de la rotation de l'organe complémentaire par rapport à la porte, le dispositif de gestion comprenant le ou chaque vérin principal et au moins un commutateur de mise en rotation configuré pour générer la mise en rotation de l'organe complémentaire par rapport à la porte, en fonction du couple appliqué sur l'organe complémentaire par le ou chaque vérin principal.

Dans une variante, la machine agricole de distribution de produit pour l'alimentation des animaux et/ou la formation de leur litière selon la présente invention, la machine agricole de distribution comprenant un caisson et une porte de chargement des produit articulée en rotation sur le caisson autour d'un premier axe de rotation, un organe complémentaire articulé en rotation sur la porte autour d'un deuxième axe de rotation et au moins un vérin principal pour l'actionnement de la porte articulé en rotation sur le caisson autour d'un troisième axe de rotation et sur la porte autour d'un quatrième axe de rotation, se caractérise en ce qu'elle comprend en outre un dispositif de gestion de la rotation de l'organe complémentaire par rapport à la porte comprenant :

- au moins un vérin complémentaire distinct du ou de chaque vérin principal et articulé en rotation sur la porte autour d'un cinquième axe de rotation et sur l'organe complémentaire autour d'un sixième axe de rotation, l'actionnement du ou de chaque vérin complémentaire générant la mise en rotation de l'organe complémentaire par rapport à la porte,
- au moins un circuit de commande du ou de chaque vérin complémentaire.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en perspective de l'arrière d'une machine agricole de distribution, selon la présente invention, avec une balle chargée sur la porte qui est ouverte, la porte et l'organe complémentaire reposant sur le sol,
[Fig. 2] montre la machine agricole de distribution représentée sur la figure 1, dont la porte est dans une position intermédiaire entre sa position d'ouverture représentée sur la figure 1 et sa position de fermeture, l'organe complémentaire se trouvant dans une position repliée permettant le maintien de la balle sur la porte,
[Fig. 3] est une vue de profil de la porte montrant en traits interrompus l'organe complémentaire et le vérin principal dans la position dépliée de la figure 1 et en traits continus l'organe complémentaire dans sa position repliée,
[Fig. 4] est une vue de détail au niveau du commutateur de mise en rotation monté sur l'un des côtés de la porte, dans une position dépliée de l'organe complémentaire adaptée à un sol en pente,
[Fig. 5] est une vue de profil de la machine agricole de distribution représentée sur la figure 1 avec la porte en position de fermeture et l'organe complémentaire en position repliée,
[Fig. 6] montre la porte représentée sur la figure 5 avec l'organe complémentaire en position dépliée,
[Fig. 7] montre une variante de machine agricole de distribution en vue de profil dont la porte est dans une position intermédiaire,
[Fig. 8] représente le circuit de commande du vérin complémentaire du dispositif de gestion de la figure 7 dans une forme particulière relié au circuit de commande du vérin principal.

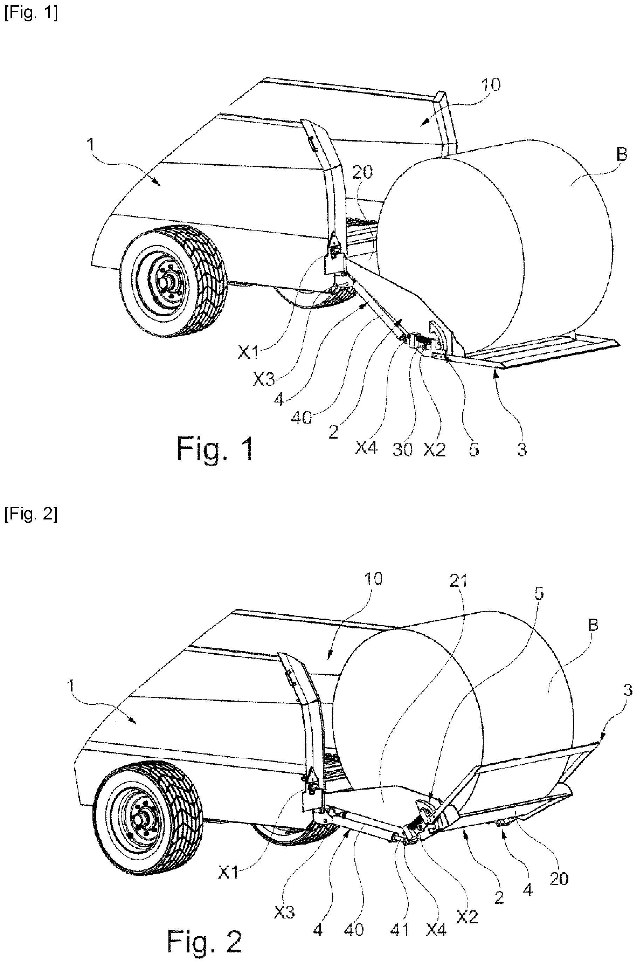

Les figures annexées montrent une machine agricole de distribution de produit B pour l'alimentation des animaux et/ou la formation de leur litière. La machine agricole de distribution comprenant un caisson 1 et une porte 2 de chargement articulée en rotation sur le caisson 1 autour d'un premier axe de rotation X1, un organe complémentaire 3 articulé en rotation sur la porte 2 autour d'un deuxième axe de rotation X2 et au moins un vérin 4 principal pour l'actionnement de la porte 2. La porte 2 s'étend avantageusement à l'arrière du caisson 1. La porte 2 est ainsi capable de basculer d'une position de fermeture à une position d'ouverture et inversement. Sur la figure 1, la porte 2 fixée à l'arrière du caisson 1 est ouverte et repose sur le sol. Dans la suite de la description, on utilisera le terme produit au singulier pour désigner par exemple de la paille ou du foin. Le produit se présente sous la forme d'une balle, par exemple d'une balle de forme cylindrique. Une telle balle de produit B peut être chargée sur la porte 2. L'organe complémentaire 3 s'étend dans le prolongement de la porte et repose aussi sur le sol S. Sur la figure 2, la porte 2 s'étend dans une position intermédiaire, dans laquelle elle est soulevée par rapport au sol S. Dans cette position intermédiaire, la balle cylindrique est maintenue en équilibre dans la porte 2. Cette position permet par exemple de couper les liens entourant la balle avant qu'elle pénètre dans le caisson 1 pour être distribuée. Lorsque la porte 2 passe de sa position d'ouverture à sa position de fermeture et inversement, elle passe nécessairement par la position intermédiaire.

Le ou chaque vérin 4 principal est articulé en rotation sur le caisson 1, de préférence sur la partie basse du caisson 1, autour d'un troisième axe de rotation X3. De préférence, le troisième axe de rotation X3 est situé sous le premier axe de rotation X1, comme on peut le voir sur les figures 1, 2, 3, 5 à 7. Dans l'exemple de réalisation préféré, la rotation de la porte 2 est commandée par deux vérins 4 principaux, comme visible sur la figure 2. Un vérin 4 principal est disposé de chaque côté de la porte 2. Dans une alternative non représentée, la présente invention peut prévoir un seul vérin 4 principal pour commander la porte 2 qui peut, de préférence, être disposé au milieu de la porte 2 et, de préférence, au milieu du caisson 1.

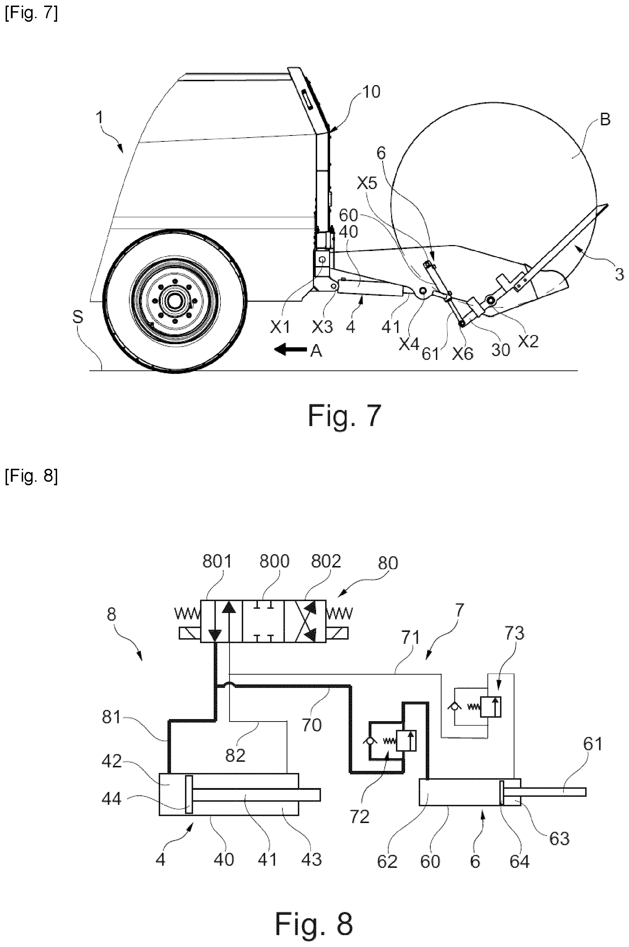

De préférence, le ou chaque vérin 4 principal peut être un vérin double effet simple tige (équipé d'une seule tige 41) comprenant un piston 44 relié à la tige 41 et séparant deux chambres 42, 43 contenant chacune un fluide sous pression, à savoir une petite chambre 43 dans laquelle se trouve la tige 41 et une grande chambre 42 du côté opposé (voir notamment la figure 8). Le circuit de commande d'un tel vérin est connu et peut comprendre notamment un distributeur 80 commandé électriquement pour pouvoir mettre alternativement l'une des chambres 42, 43 en communication fluidique avec la source de fluide et l'autre chambre 42, 43 avec un réservoir (non représenté) contenant le fluide sous pression, ceci afin de commander le mouvement du piston 44 et donc de la tige 41. Ainsi le ou chaque vérin 4 principal peut être commandé de sorte que la sortie de la tige 41 entraîne la rotation de la porte 2 dans le sens de rotation vers sa position de fermeture et que la rentrée de la tige 41 entraîne la rotation de la porte 2 dans le sens opposé vers sa position d'ouverture.

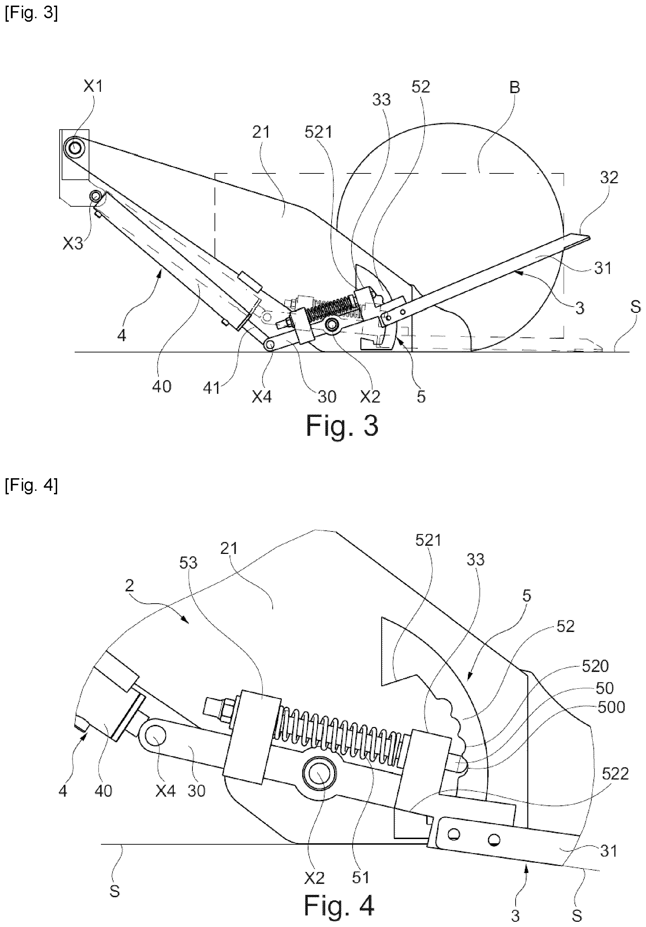

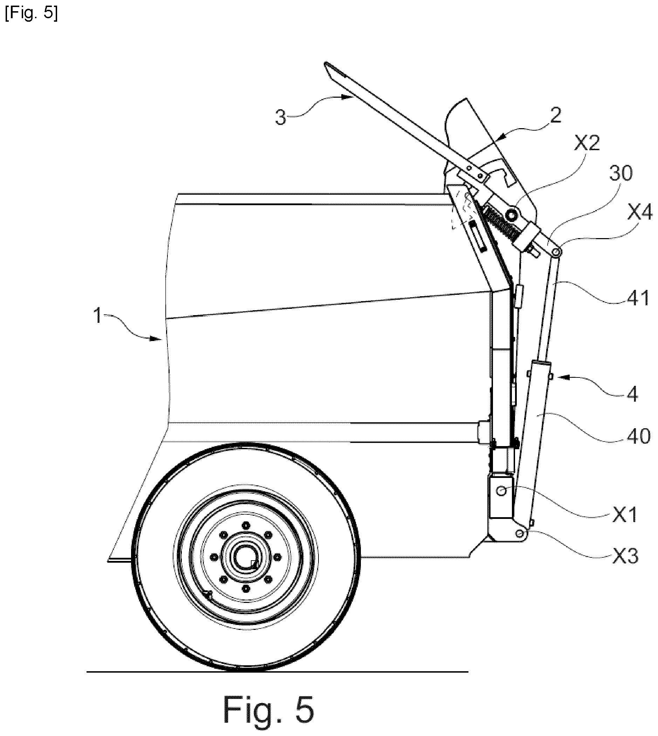

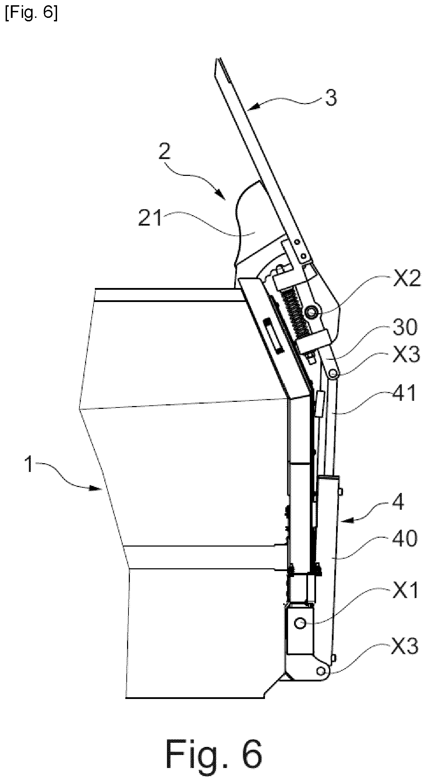

Comme on peut le voir sur les figures 1, 2, 5 à 7, le caisson 1 peut comporter une ouverture de chargement 10. L'ouverture de chargement 10 est située à l'arrière du caisson 1 (ou de la machine) pour permettre un chargement du produit conditionné sous forme de balle en marche arrière, lorsque la porte est en position d'ouverture. De préférence, le caisson 1 peut comporter deux parois délimitant entre elles à l'arrière du caisson un espace formant l'ouverture de chargement 10. La porte 2, dans sa position de fermeture, permet de fermer l'ouverture de chargement 10 . Le caisson est avantageusement formé par les deux parois latérales du caisson 1 et la porte 2 de chargement. A l'avant du caisson 1 se situe un dispositif de démêlage et d'éjection. Le fond du caisson 1 est constitué d'un plancher équipé d'un dispositif de déplacement. Ce dispositif de déplacement permet le déplacement du produit de l'arrière vers l'avant du caisson 1. Le produit est déplacé vers le dispositif de démêlage et d'éjection. La porte 2 est montée en rotation, plus particulièrement de manière basculante, entre la position de fermeture de l'ouverture de chargement 10 (figures 5, 6) et une position d'ouverture. En position d'ouverture, la porte 2 est posée sur le sol S (figures 1, 3). La porte 2 peut être commandée de sorte à être maintenue dans une position d'ouverture intermédiaire entre la position de fermeture et la position d'ouverture posée sur le sol S. Dans la position d'ouverture posée sur le sol S, une balle de produit B peut être chargée dans la porte 2 (figures 1 et 3) en vue de son introduction dans le caisson 1 sous l'effet de la fermeture de la porte 2.

Lorsque la porte 2 est en position de fermeture comme sur les figures 5 et 6, le produit conditionné (balle cylindrique ou parallélépipédique) chargé dans le caisson 1 peut être transporté d'un endroit de stockage à un hangar avec du bétail. Le transport de produit non conditionné est également possible. Lorsque la porte 2 est fermée, l'ouverture du chargement 10 est close et le produit reste enfermé dans le caisson 1. Le produit conditionné ou non peut alors être transformé et/ou distribué à l'endroit prévu par la machine de distribution.

De préférence, la porte 2 peut être montée en rotation en partie basse du caisson 1. De préférence, la porte 2 peut être constituée d'une plateforme 20, ajourée ou non, apte à supporter le produit B, notamment sous la forme d'une balle. La plateforme 20 peut être munie latéralement de flancs 21 permettant de maintenir le produit B sur la plateforme 20. Un flanc 21 s'étend de part et d'autre de la plateforme 20. La plateforme 20 peut comprendre une embase (figures 1, 2, 3, 5, 6, 7) permettant à l'extrémité de la porte 2 de reposer sur un sol S. Lorsque l'embase est sensiblement à plat sur un sol S horizontal, la plateforme 20 est alors inclinée par rapport au sol S (voir figure 3 notamment). L'embase est située dans le prolongement de la plateforme 20 et est orientée de manière à pouvoir ramasser une balle de produit B.

L'axe de rotation X1 de la porte 2 peut être réalisé à partir d'une ou plusieurs liaisons pivots (ou articulations), par exemple deux liaisons pivots disposées de chaque côté du caisson 1.

Pour permettre le chargement du produit B dans la porte 2, celle-ci est équipée de l'organe complémentaire 3 qui peut, dans une position de rotation adaptée appelée position dépliée, reposer sur le sol S afin de venir se glisser avec un effet similaire à une pelle, sous le produit B, notamment sous une balle de produit B, par exemple avec un déplacement de la machine agricole vers l'arrière. L'organe complémentaire 3 présente une forme susceptible de retenir la balle lors du basculement de la porte 2. On peut voir notamment sur les figures 1, 2, 3, 7 que l'organe complémentaire 3 peut présenter une forme d'arceau. Il peut présenter une forme de U, dont chaque branche 31 peut être montée en rotation autour du deuxième axe de rotation X2 respectif. Chaque branche 31 est par exemple articulée autour d'un pivot formant l'axe de rotation X2 et est fixé sur l'un des côtés de la porte 2. La base 32 du U reliant les branches 31 peut former une barre d'extrémité parallèle à la partie d'extrémité de la porte 2 et/ou à l'axe de rotation X1 de la porte sur le caisson 1. L'organe complémentaire 3 permet également, dans une position repliée, de maintenir la balle de produit B dans la porte 2, plus particulièrement à l'extrémité de cette dernière, lors de la phase de fermeture de la porte 2, c'est-à-dire le temps que la porte 2 se trouve dans une position de rotation avec une inclinaison entraînant automatiquement le produit B dans le caisson 1 par gravité. L'organe complémentaire 3 permet également, dans une position repliée, de retenir la balle après que le filet ou la ficelle l'entourant (non représenté(e)) pour la maintenir en forme a été coupé(e). La figure 3 représente en traits continus cette position repliée de l'organe complémentaire 3. La balle de produit B peut, au lieu d'être de forme cylindrique, être de forme parallélépipédique. Dans le cas d'une balle de forme parallélépipédique, telle qu'illustrée en traits discontinus sur la figure 3, l'organe complémentaire 3 permet de rallonger la partie d'extrémité de la porte 2 pour s'assurer que la balle reste bien sur la porte 2 lorsqu'elle bascule vers la position de fermeture et soit chargée dans le caisson 1.

De préférence, les premier, deuxième, troisième et quatrième axes de rotation X1, X2, X3, X4 sont parallèles entre eux. De préférence, les premier et troisième axes de rotation X1, X3 peuvent s'étendre au niveau du caisson 1, alors que les deuxième et quatrième axes de rotation X2 et X4 peuvent s'étendre au niveau de la porte 2. De préférence, le premier axe de rotation X1 est proche, c'est-à-dire dans le voisinage, du troisième axe de rotation X3 et/ou le deuxième axe de rotation X2 est proche, c'est-à-dire dans le voisinage, du quatrième axe de rotation X4.

De préférence, l'axe de rotation X2 de l'organe complémentaire 3 peut être situé à proximité de l'extrémité libre de la porte 2. Le cas échéant, l'axe de rotation X2 peut être situé à proximité de la partie d'extrémité de la porte 2, c'est-à-dire à l'opposé de l'axe de rotation X1 de la porte 2 sur le caisson 1.

Conformément à la présente invention, la machine agricole de distribution comprend en outre un dispositif de gestion de la rotation de l'organe complémentaire 3 par rapport à la porte 2. Grâce à ce dispositif de gestion, l'organe complémentaire 3 peut être placé dans différentes positions par rapport à celle de la porte 2. De cette manière, la machine de distribution s'adapte mieux à l'environnement et les conditions d'utilisation et de chargement sont améliorées.

On entend par dispositif de gestion un dispositif qui permet de gérer la rotation de l'organe complémentaire 3 indépendamment de la position de la porte 2 de chargement. Ainsi, pour au moins une position de la porte 2, l'organe complémentaire 3 peut être commandé dans au moins deux positions de rotation différentes. Par exemple, tel que représenté à la figure 3, l'organe complémentaire 3 peut être commandé dans au moins deux positions de rotation différentes lorsque la porte 2 repose sur le sol S dans sa position d'ouverture. Sur la figure 3 l'organe complémentaire 3, représenté en traits continus, est dans une position repliée assurant par exemple le maintien de la balle cylindrique, alors que l'organe complémentaire 3, représenté en traits discontinus, est déplié dans le but de recevoir ou de charger une balle de produit B. De même pour la position de fermeture de la porte 2, l'organe complémentaire 3 peut s'étendre dans au moins deux positions différentes, voir les figures 5 et 6. L'organe complémentaire 3 de la figure 6 est déplié alors qu'il est replié sur la figure 5. Le repliage de l'organe complémentaire 3 tel que représenté à la figure 5 permet de réduire la hauteur de la machine agricole de distribution, de manière à autoriser son accès à des bâtiments dont la hauteur d'accès est limitée. La position dépliée de l'organe complémentaire 3 (figure 6) permet avantageusement un chargement du caisson 1 par le haut, la porte 2 se trouvant dans sa position de fermeture. La position de l'organe complémentaire 3 de la présente invention n'est donc pas contrainte à la position de la porte 2, la polyvalence de la machine de distribution est ainsi augmentée.

Les figures 1 à 6 montrent une machine agricole de distribution selon la présente invention dans laquelle le ou chaque vérin 4 principal est articulé en rotation sur le caisson 1 autour du troisième axe de rotation X3 et sur l'organe complémentaire 3 autour d'un quatrième axe de rotation X4. Dans cette variante, le dispositif de gestion de la rotation de l'organe complémentaire 3 par rapport à la porte 2 comprend le ou chaque vérin 4 principal et au moins un commutateur de mise en rotation 5 configuré pour générer la mise en rotation de l'organe complémentaire 3 par rapport à la porte 2, en fonction du couple appliqué sur l'organe complémentaire 3 par le ou chaque vérin 4 principal. De préférence, le ou chaque vérin 4 principal est un vérin double effet permettant de basculer la porte 2 d'une position d'ouverture vers une position de fermeture et inversement.

Dans cette variante, le corps 40 du ou de chaque vérin 4 principal peut être articulé en rotation sur le caisson 1 autour du troisième axe de rotation X3 et la tige 41 du ou de chaque vérin 4 principal peut être montée en rotation, à son extrémité, sur l'organe complémentaire 3 autour du quatrième axe de rotation X4. Selon une autre forme de réalisation non représentée, le corps du ou de chaque vérin 4 principal peut être articulé en rotation sur l'organe complémentaire au moyen du quatrième axe de rotation X4 et la tige du ou de chaque vérin 4 principal peut être fixée au caisson au moyen du troisième axe de rotation X3.

Dans un mode de réalisation préférentiel, le au moins un commutateur de mise en rotation 5 est configuré pour générer la mise en rotation de l'organe complémentaire 3 par rapport à la porte 2 lorsque le couple appliqué par le ou chaque vérin 4 principal sur l'organe complémentaire 3 est supérieur à une force de retenue appliquée par le(s) commutateur(s) 5 sur l'organe complémentaire 3 et s'opposant à la rotation de l'organe complémentaire 3 puis pour générer la mise en rotation de la porte 2 équipée de l'organe complémentaire 3 lorsque le couple appliqué par le ou chaque vérin 4 principal sur l'organe complémentaire 3 est inférieur à la force de retenue.

De préférence le au moins un commutateur de mise en rotation 5 peut s'étendre sensiblement dans le voisinage du deuxième axe de rotation X2. Selon une réalisation préférentielle, un commutateur de mise en rotation 5 est prévu sur chacun des flancs 21 de la porte 2. Seul l'un des commutateurs de rotation 5 (côté gauche pour un observateur regardant l'arrière de la machine/du caisson) est visible sur les figures.

De préférence, comme on peut le voir sur les figures 1 à 6, le ou chaque vérin 4 principal peut être articulé (autour du quatrième axe de rotation X4) sur un bras de levier 30 formé par une partie de l'organe complémentaire 3. Le bras de levier 30 peut être intégré dans l'organe complémentaire 3 (réalisé de toute pièce lors de la fabrication avec ce dernier) ou être rapporté dans/sur celui-ci. Le bras de levier 30 peut s'étendre entre le deuxième axe de rotation X2 et le quatrième axe de rotation X4.

Dans un mode de réalisation préférentiel, le ou chaque commutateur de mise en rotation 5 peut comprendre un verrou suiveur 50 et un ressort 51 solidaires de l'organe complémentaire 3, respectivement de la porte 2 et un chemin de came et d'indexation 52 coopérant avec le verrou suiveur 50 et étant solidaire de la porte 2, respectivement de l'organe complémentaire 3, comportant au moins deux crans 520 d'indexation, de préférence en arc de cercle, aptes chacun à recevoir, sous l'effet de la force de rappel du ressort 51 exercée sur le verrou suiveur 50, une extrémité 500 du verrou suiveur 50. Chaque cran 520 d'indexation définit ainsi une position prédéterminée de l'organe complémentaire 3 par rapport à la porte 2. La force de rappel (ou de précharge) du ressort 51 réalise/correspond à la force de retenue précitée. Il peut être considéré que le premier cran 520 d'indexation est celui qui est situé le plus près de la plateforme 20 de la porte 2.

De préférence et selon la figure 4, le chemin de came et d'indexation 52 présente une forme de denture en arc de cercle. Les différents crans 520 d'indexation réalisent la denture en arc de cercle. Le verrou 50 est alors rendu mobile radialement par rapport au chemin de came et d'indexation 52. Un système de palier 53 solidaire de l'organe complémentaire 3 permet d'assurer le guidage du verrou suiveur 50.

De préférence, le chemin de came et d'indexation 52 comporte au moins une butée 521, 522. Selon la réalisation représentée à la figure 4, le chemin de came et d'indexation 52 comporte deux butées 521, 522 de fin de course, respectivement une butée 521 haute et une butée 522 basse. L'organe complémentaire 3 dispose quant à lui, d'au moins une face de contact 33 apte et destinée à venir en butée contre l'une des butées 521, 522. La butée 521 haute définit une limite de rotation de l'organe complémentaire 3 en position repliée (figures 2, 3, 5) et la butée 522 basse définit une limite de rotation de l'organe complémentaire 3 en position dépliée (figures 1, 3, 4, 6). Les butées 521, 522 permettent de limiter l'angle de rotation de l'organe complémentaire 3 par rapport à la porte 2 et autour du deuxième axe de rotation X2. Sur les figures 2 et 3, l'organe complémentaire 3 est représenté dans une position repliée (en bout de course) permettant de retenir la balle de produit B dans la porte 2. La porte est, quant à elle, dans une position intermédiaire (figure 2) ou dans une position d'ouverture (figure 3). La face de contact 33 s'appuie sur la butée 521 haute et l'extrémité 500 du verrou suiveur 50 est placé dans le dernier cran 520 du chemin de came et d'indexation 52. Sur la figure 5, on aperçoit l'organe complémentaire 3 dans sa position repliée et la porte 2 en position de fermeture. La face de contact 33 de l'organe complémentaire 3 s'appuie sur la butée 521 haute. Cette position de bout de course peut correspondre au dernier cran 520 d'indexation du chemin de came et d'indexation 52.

L'axe longitudinal du verrou suiveur 50 est de préférence sensiblement parallèle au plan coupant perpendiculairement les deuxième et quatrième axes de rotation X2, X4 parallèles entre eux.

De manière particulièrement avantageuse, le pivotement de l'organe complémentaire 3 ne peut avoir lieu que si le couple exercé sur l'organe complémentaire 3 autour du deuxième axe de rotation X2 par le vérin 4 principal dépasse la force de retenue, c'est-à-dire la force de compression du ressort 51.

Dans une autre forme de réalisation, non représentée, le ou chaque commutateur de mise en rotation 5 peut consister en un mécanisme à frottement ou en un mécanisme du type vérin et accumulateur.

Le fonctionnement du dispositif de gestion peut être le suivant, en considérant un dispositif de gestion comprenant un vérin 4 principal et un commutateur de mise en rotation 5 de part et d'autre de la porte 2 :

Pour la phase de fermeture de la porte 2, la porte 2 et l'organe complémentaire 3 reposent sur le sol S (voir notamment les figures 1 et 4). La porte 2 est dans sa position d'ouverture et l'organe complémentaire 3 est dans une position dépliée. Sur la figure 1, le sol S est sensiblement horizontal et l'extrémité 500 du verrou suiveur 50 est placée dans le deuxième cran 520 d'indexation, en partant de la plateforme 20 de la porte 2. L'organe complémentaire 3 est sensiblement aligné avec l'embase de la porte 2 (tel que représenté sur la figure 3 en traits discontinus). Sur la figure 4, on peut voir qu'une une partie du sol S n'est pas horizontale, mais légèrement en pente et que l'extrémité 500 du verrou suiveur 50 est insérée dans le premier cran 520 d'indexation. Grâce à cette position supplémentaire (ce premier cran), l'organe complémentaire peut s'adapter librement et épouser la pente du sol S pour faciliter le chargement de la balle de produit B. La position supplémentaire permet à l'embase de la porte 2 et à l'organe complémentaire 3 de reposer sur le sol S. Avec une telle machine de distribution, il y a lieu de considérer une phase de fermeture de la porte 2 avec une balle de produit B et une phase de fermeture de la porte 2 sans balle de produit B.

En l'absence de produit B chargé sur la porte 2, l'effort pour déplacer la porte 2 vers le haut en position de fermeture est faible.

L'effort dans le vérin 4 principal résultant est aussi faible. Le couple généré au niveau du point de rotation entre l'organe complémentaire 3 et la porte 2, c'est-à-dire autour du deuxième axe de rotation X2, reste faible. L'effort de contact résultant de ce couple entre le verrou suiveur 50 et le chemin de came et d'indexation 52 ne permet pas de comprimer le ressort 51 (effort inférieur à la force de rappel du ressort 51). Il en résulte que le verrou suiveur 50 ne bouge pas, l'extrémité 500 reste dans son cran 520 d'indexation. L'organe complémentaire 3 ne bouge pas par rapport à la porte 2, qui bascule vers le haut sous l'effet de la sortie de la tige 41 du vérin 4 principal. La porte 2 et l'organe complémentaire 3 vont donc s'élever jusqu'à ce que la porte 2 arrive en butée contre le seuil de l'ouverture de chargement 10 du caisson 1. Durant ce basculement de la porte 2, l'organe complémentaire 3 conserve sa position dans le cran 520 d'indexation. Lorsque la porte 2 arrive en appui sur le seuil de l'ouverture 10 de chargement (figure 6), l'effort dans le ou chaque vérin 4 principal augmente, ce qui a pour effet que l'effort de compression du ressort 51 augmente jusqu'à atteindre la valeur de la force de rappel (ou de précharge) du ressort 51 entraînant la compression du ressort 51 et donc un retrait du verrou suiveur 50 (plus particulièrement de son extrémité 500) du premier ou deuxième cran 520 d'indexation. Lorsque l'effort est suffisant, le verrou suiveur 50 passe alors le premier ou deuxième cran 520 d'indexation, puis successivement les autres crans 520 d'indexation générant un déplacement du verrou suiveur 50 par rapport au chemin de came et d'indexation 52. Ceci entraine un pivotement de l'organe complémentaire 3 par rapport à la porte 2, l'organe complémentaire 3 se replie pour se rapprocher du caisson 1. Si l'effort diminue sous la valeur de précharge, le verrou suiveur 50 vient s'insérer sous l'effet de la force de rappel dans le cran 520 d'indexation concerné et le mouvement de rotation de l'organe complémentaire 3 par rapport à la porte 2 cesse.

En présence de produit B chargé sur la porte 2, l'effort pour déplacer la porte 2 est plus important que dans le cas à vide, du fait du poids de la charge (produit B). La charge, plusieurs centaines de kilogramme, présente sur la porte 2 permet de vaincre la force de rappel du ressort 51, ce qui génère un mouvement de rotation de l'organe complémentaire 3 par rapport à la porte 2. Le dispositif de gestion permet donc un pivotement de l'organe complémentaire 3 vers sa position repliée sans déplacement de la porte 2. Lors de l'actionnement du vérin 4 principal pour lever la porte 2 sous charge, l'organe complémentaire 3 pivote en priorité grâce au commutateur de mise en rotation 5. Si le couple du vérin 4 principal sur la porte 2 augmente suffisamment, la porte 2 décolle du sol S en se déplaçant en rotation autour du premier axe de rotation X1, sinon le mouvement de rotation de l'organe complémentaire 3 continue jusqu'à la face de contact 33. Lorsque la porte 2 arrive en butée, l'effort dans le vérin 4 principal augmente encore, ce qui permet de lever la porte 2 en vue d'introduire la balle de produit B dans le caisson 1.

Dans la phase d'ouverture de la porte 2 en partant de la position de fermeture en butée contre le seuil de l'ouverture de chargement 10 du caisson 1 et d'une position repliée de l'organe complémentaire 3 en bout de course, l'effort pour déplacer la porte 2 est faible. L'effort dans le vérin 4 principal résultant est aussi faible. Le couple généré sur l'organe complémentaire 3 autour du deuxième axe de rotation X2 reste alors faible. L'effort de contact résultant de ce couple entre le verrou suiveur 50 et le chemin de came et d'indexation 52 ne permet pas de comprimer le ressort 51 (effort inférieur à la force de rappel du ressort 51). Il en résulte que le verrou suiveur 50 ne bouge pas et que l'organe complémentaire 3 conserve sa position par rapport à la porte 2 qui est déplacée en rotation. La porte 2 va donc s'abaisser sous l'effet de la rentrée de la tige 41 du vérin 4 principal, jusqu'à ce qu'elle arrive en butée contre le sol S. Lorsque la porte 2 arrive en butée sur le sol S, l'effort dans le vérin 4 principal augmente, cela se répercute sur l'effort de compression du ressort 51 qui augmente jusqu'à atteindre la valeur de la force de rappel (précharge) du ressort. Alors seulement le ressort 51 se comprime entraînant le mouvement de rentrée du verrou suiveur 50 et donc le déplacement du verrou suiveur 50 par rapport au chemin de came et d'indexation 52. Ceci génère un mouvement de rotation de l'organe complémentaire 3 par rapport à la porte 2. Lorsque l'effort est suffisant le verrou suiveur 50 passe successivement les crans 520 d'indexation jusqu'à atteindre le premier ou le deuxième cran 520 d'indexation. Si l'effort diminue en devenant inférieur à la valeur de la force de rappel (sous la valeur de précharge) le mouvement de rotation de l'organe complémentaire 3 cesse. De cette manière, le pivotement de l'organe complémentaire 3 est géré. L'organe complémentaire 3 pivote vers le sol S jusqu'à atteindre à son tour le sol S et s'adapte notamment à la pente du sol S. Ce mode de fonctionnement pour la phase d'ouverture de la porte 2 est identique, que la porte 2 soit à vide ou en charge.

Dans sa partie avant, la machine peut être pourvue d'un système d'attelage lui permettant d'être portée par un tracteur au niveau de son attelage trois points. Une machine portée est dépourvues d'essieu, elle ne comporte pas de roues. En variante, le caisson 1 comporte des roues et la machine est pourvue d'un timon d'attelage pour pouvoir être tirée à l'arrière d'un tracteur. Seule la partie arrière de la machine agricole de distribution est représentée sur les figures 1, 2 et 5. La machine agricole de distribution est par exemple du type pailleuse permettant de charger le produit B sous forme de balle sur la porte, de transférer le produit B sous la forme d'une balle dans le caisson 1 pour être déstructuré et réparti sur le sol S sous forme d'andain au niveau d'une table d'alimentation, ou alors réparti largement sur la surface du sol S grâce à une turbine qui expulse la paille à plusieurs mètres. Généralement, une telle balle est chargée dans le caisson 1 au moyen de la porte 2. La balle est chargée sur la porte 2 dans sa position d'ouverture par une manoeuvre en marche arrière du tracteur. L'organe complémentaire 3, puis la porte 2, posés sur le sol, passent successivement sous la balle pour la charger lors de la marche arrière. Il est également possible d'effectuer le chargement de la balle directement sur la plateforme de la porte en utilisant un autre tracteur. Lorsque la balle est chargée sur la porte 2 posée au sol, l'opérateur va replier l'organe complémentaire 3 tel que représenté sur la figure 3 (traits continus) grâce au commutateur de mise en rotation 5 et du vérin 4 principal, puis relever la porte 2 jusqu'à une position intermédiaire, par exemple celle représentée sur la figure 2, pour couper et retirer les liens entourant le produit. Une fois les liens retirés, l'opérateur remonte dans le tracteur pour basculer la porte 2 dans sa position de fermeture et par conséquent transférer la balle dans le caisson 1.

La figure 7 montre une variante de la machine agricole de distribution de produit B pour l'alimentation des animaux et/ou la formation de leur litière. Dans cette variante, la porte 2 et l'organe complémentaire 3 sont chacun commandé par au moins un vérin respectif. La porte 2 est actionnée par le au moins un vérin 4 principal articulé en rotation, d'une part sur le caisson 1 autour du troisième axe de rotation X3 et d'autre part sur la porte 2 autour d'un quatrième axe de rotation X4. L'organe complémentaire 3 est actionné par au moins un vérin 6 complémentaire. Le dispositif de gestion comprend d'une part au moins un vérin 6 complémentaire distinct du ou de chaque vérin 4 principal et articulé en rotation sur la porte 2 autour d'un cinquième axe de rotation X5 et sur l'organe complémentaire 3 autour d'un sixième axe de rotation X6, l'actionnement du ou de chaque vérin 6 complémentaire générant la mise en rotation de l'organe complémentaire 3 par rapport à la porte 2 et, d'autre part au moins un circuit de commande 7 du ou de chaque vérin 6 complémentaire. La figure 8 représente le circuit de commande du vérin 6 complémentaire relié au circuit de commande du vérin 4 principal.

De préférence, le ou chaque vérin 6 complémentaire peut comporter un corps 60 articulé en rotation sur la porte 2, de préférence sur l'un des flancs 21 de la porte 2, de préférence sur la face externe du flanc 21, autour du cinquième axe de rotation X5 et une tige 61 articulée en rotation à son extrémité sur l'organe complémentaire 3 autour du sixième axe de rotation X6.

De préférence, le ou chaque vérin 6 complémentaire est un vérin double effet simple tige (équipé d'une seule tige 61) comprenant un piston 64 relié à la tige 61 et séparant deux chambres 62, 63 renfermant un fluide sous pression, à savoir une petite chambre 63 dans laquelle se trouve la tige 61 et une grande chambre 62 du côté opposé.

Dans une forme de réalisation préférentielle, comme on peut le voir sur la figure 8, un ou chaque circuit de commande 7 est configuré de sorte à commander l'actionnement du ou de chaque vérin 6 complémentaire en fonction de la pression de commande du ou de chaque vérin 4 principal.

Le circuit de commande 8 du ou de chaque vérin 4 principal peut comprendre un distributeur 80 à trois tiroirs, une première conduite principale 81 reliant la grande chambre 42 du vérin 4 principal au distributeur 80 et une deuxième conduite principale 82 reliant la petite chambre 43 au distributeur 80. Le distributeur 80 peut comprendre trois positions, à savoir une position de repos 800 (tiroir en position centrale), une première position de travail 801 (tiroir déplacé vers la droite tel que représenté sur la figure 8) et une deuxième position de travail 802 (tiroir déplacé sur la gauche). Le circuit de commande 7 du ou de chaque vérin 6 complémentaire peut comprendre une première conduite additionnelle 70, une deuxième conduite additionnelle 71, un premier limiteur de pression 72 et un deuxième limiteur de pression 73. La première conduite additionnelle 70 relie, via le premier limiteur de pression 72, la grande chambre 62 du vérin 6 complémentaire à la première conduite principale 81 et la deuxième conduite additionnelle 71 relie, via le deuxième limiteur de pression 73, la petite chambre 63 à la deuxième conduite principale 82.

Plus particulièrement, le circuit (traits fins) comprenant les deuxièmes conduites principale 82 et additionnelle 71 permet de commander la descente (déplacement vers la position de fermeture) de la porte 2 et au moins plusieurs positions de l'organe complémentaire 3. Le circuit (traits épais) comprenant les premières conduites principale 81 et additionnelle 70 permet de commander la montée de la porte 2 et au moins plusieurs positions de l'organe complémentaire 3.

Pour réaliser la montée (ou la fermeture) de la porte 2, le distributeur 80 est commandé de sorte à envoyer l'huile sous pression, d'une part, au moyen de la première conduite principale 81, dans la grande chambre 42 du vérin 4 principal (actionnant la porte 2) et, d'autre part, au moyen de la première conduite additionnelle 70, dans la grande chambre 62 du vérin 6 complémentaire. Si la porte 2 est vide (aucun produit B chargé), le premier limiteur de pression 72 « bloque » le passage de l'huile sous pression vers la grande chambre 62 du vérin 6 complémentaire et la porte 2 remonte jusqu'en butée haute, c'est-à-dire en butée contre le seuil de l'ouverture de chargement 10. Lorsque la porte 2 arrive en butée contre le seuil de l'ouverture de chargement 10, la pression dans la première conduite additionnelle 70, du fait de sa connexion avec la première conduite principale 81, augmente et le premier limiteur de pression 72 « libère » donc le passage de l'huile sous pression vers la grande chambre 62 du vérin 6 complémentaire, ce qui a pour effet de faire sortir la tige 61 et de mettre en rotation l'organe complémentaire 3 en permettant ainsi le repliage de celui-ci.

Pour réaliser la descente (ou l'ouverture) de la porte 2, le distributeur 80 est commandé de sorte à envoyer l'huile sous pression, d'une part au moyen de la deuxième conduite principale 82 dans la petite chambre 43 du vérin 4 principal et d'autre part au moyen de la deuxième conduite additionnelle 71 dans la petite chambre 63 du vérin 6 complémentaire. La porte 2 étant vide, le deuxième limiteur de pression 73 « bloque » le passage vers la petite chambre 63 du vérin 6 complémentaire et la porte 2 descend (ou s'ouvre) jusqu'à toucher le sol S. Lorsque la porte 2 arrive en contact avec le sol S, la pression dans la deuxième conduite additionnelle 71 augmente et le deuxième limiteur de pression 73 « libère » le passage vers la petite chambre 63 du vérin 6 complémentaire, ce qui a pour effet de faire rentrer la tige 61 et de mettre en rotation l'organe complémentaire 3 dans le sens inverse en permettant ainsi le dépliage de celui-ci.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine agricole de distribution de produit (B) pour l'alimentation des animaux et/ou la formation de leur litière, la machine agricole de distribution comprenant un caisson (1) et une porte (2) de chargement articulée en rotation sur le caisson (1) autour d'un premier axe de rotation (X1), un organe complémentaire (3) articulé en rotation sur la porte (2) autour d'un deuxième axe de rotation (X2) et au moins un vérin (4) principal pour l'actionnement de la porte (2), **caractérisée en ce que** le ou chaque vérin (4) principal est articulé en rotation sur le caisson (1) autour d'un troisième axe de rotation (X3) et sur l'organe complémentaire (3) autour d'un quatrième axe de rotation (X4) et **en ce qu'**elle comprend en outre un dispositif de gestion de la rotation de l'organe complémentaire (3) par rapport à la porte (2), le dispositif de gestion comprenant le ou chaque vérin (4) principal et au moins un commutateur de mise en rotation (5) configuré pour générer la mise en rotation de l'organe complémentaire (3) par rapport à la porte (2), en fonction du couple appliqué sur l'organe complémentaire (3) par le ou chaque vérin (4) principal.

2. Machine agricole de distribution selon la revendication 1, **caractérisée en ce que** le au moins un commutateur de mise en rotation (5) est configuré pour :
- générer la mise en rotation de l'organe complémentaire (3) par rapport à la porte (2) lorsque le couple appliqué par le ou chaque vérin (4) principal sur l'organe complémentaire (3) est supérieur à une force de retenue appliquée par le(s) commutateur(s) (5) sur l'organe complémentaire (3) et s'opposant à la rotation de l'organe complémentaire (3),
- générer la mise en rotation de la porte (2) équipée de l'organe complémentaire (3) lorsque le couple appliqué par le ou chaque vérin (4) principal sur l'organe complémentaire (3) est inférieur à la force de retenue.

3. Machine agricole de distribution selon la revendication 1 ou la revendication 2, **caractérisée en ce que** le au moins un commutateur de mise en rotation (5) s'étend sensiblement dans le voisinage du deuxième axe de rotation (X2).

4. Machine agricole de distribution selon l'une quelconque des revendications 1 à 3, **caractérisée en ce que** le ou chaque vérin (4) principal est articulé sur un bras de levier (30) formé par une partie de l'organe complémentaire (3).

5. Machine agricole de distribution selon l'une quelconque des revendications 1 à 4, **caractérisée en ce que** le ou chaque vérin (4) principal comporte un corps (40) articulé en rotation sur la partie basse du caisson (1) autour du troisième axe de rotation (X3) et une tige (41) mobile articulée en rotation à son extrémité sur l'organe complémentaire (3) autour du quatrième axe de rotation (X4).

6. Machine agricole de distribution selon l'une quelconque des revendications 1 à 5, **caractérisée en ce que** les premier, deuxième, troisième et quatrième axes de rotation (X1, X2, X3, X4) sont parallèles entre eux.

7. Machine agricole de distribution selon l'une quelconque des revendications 1 à 6, **caractérisée en ce que** le ou chaque commutateur de mise en rotation (5) comprend :
- un verrou suiveur (50) et un ressort (51) solidaires de l'organe complémentaire (3), respectivement de la porte (2), et
- un chemin de came et d'indexation (52) coopérant avec le verrou suiveur (50) et étant solidaire de la porte (2), respectivement de l'organe complémentaire (3), comportant au moins deux crans (520) d'indexation, de préférence en arc de cercle, aptes chacun à recevoir, sous l'effet de la force de rappel du ressort (51) exercée sur le verrou suiveur (50), une extrémité (500) du verrou suiveur (50), chaque cran (520) d'indexation définissant une position de rotation prédéterminée de l'organe complémentaire (3) par rapport à la porte (2).

8. Machine agricole de distribution selon la revendication 7, **caractérisée en ce que** l'axe longitudinal du verrou suiveur (50) est sensiblement parallèle au plan coupant perpendiculairement les deuxième et quatrième axes de rotation (X2, X4) parallèles entre eux.

9. Machine agricole de distribution de produit (B) pour l'alimentation des animaux et/ou la formation de leur litière, la machine agricole de distribution comprenant un caisson (1) et une porte (2) de chargement des produit articulée en rotation sur le caisson (1) autour d'un premier axe de rotation (X1), un organe complémentaire (3) articulé en rotation sur la porte (2) autour d'un deuxième axe de rotation (X2) et au moins un vérin (4) principal pour l'actionnement de la porte (2) articulé en rotation sur le caisson (1) autour d'un troisième axe de rotation (X3) et sur la porte (2) autour d'un quatrième axe de rotation (X4), **caractérisée en ce qu'**elle comprend en outre un dispositif de gestion de la rotation de l'organe complémentaire (3) par rapport à la porte (2) comprenant :
- au moins un vérin (6) complémentaire distinct du ou de chaque vérin (4) principal et articulé en rotation sur la porte (2) autour d'un cinquième axe de rotation (X5) et sur l'organe complémentaire (3) autour d'un sixième axe de rotation (X6), l'actionnement du ou de chaque vérin (6) complémentaire générant la mise en rotation de l'organe complémentaire (3) par rapport à la porte (2),
- au moins un circuit de commande (7) du ou de chaque vérin (6) complémentaire, le au moins un circuit de commande (7) étant configuré de sorte à commander l'actionnement du ou de chaque vérin (6) complémentaire en fonction de la pression de commande du ou de chaque vérin (4) principal.
